(19) Europäisches Patentamt
European Patent Office
Office européen des brevets

(11) **EP 3 703 179 A1**

(12) **EUROPEAN PATENT APPLICATION**
published in accordance with Art. 153(4) EPC

(43) Date of publication:
**02.09.2020 Bulletin 2020/36**

(51) Int Cl.:
*H01M 10/44* (2006.01)     *H02J 7/00* (2006.01)
*G06Q 50/06* (2012.01)

(21) Application number: **18870359.9**

(22) Date of filing: **20.04.2018**

(86) International application number:
**PCT/CN2018/083840**

(87) International publication number:
**WO 2019/080464 (02.05.2019 Gazette 2019/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.10.2017 CN 201711021190**

(71) Applicant: **NIO Nextev Limited
Central, Hong Kong (HK)**

(72) Inventor: **ZHAO, Jincheng
Shanghai 201804 (CN)**

(74) Representative: **Vossius & Partner
Patentanwälte Rechtsanwälte mbB
Siebertstrasse 3
81675 München (DE)**

(54) **METHOD AND DEVICE FOR PREDICTING SERVICE CAPABILITY OF BATTERY REPLACEMENT STATION**

(57) The invention relates to a method and an apparatus for estimating a service capability of a battery swap station, the method comprising: acquiring initial charging parameters of a battery of a vehicle for which a reservation for battery swapping has been made; acquiring a corresponding charging current characteristic curve according to the initial charging parameters, and acquiring inflection point parameters of the curve; and calculating, according to the initial charging parameters and the inflection point parameters, the charging completion time of the battery of the vehicle for which a reservation for battery swapping has been made, such that the service capability of the battery swap station is estimated. By estimating the service capability of the battery swap station, the method and apparatus enables a user to reasonably select a battery swap station which can timely perform battery swapping, thereby saving battery swap time, improving battery swap efficiency, and improving user experience.

Fig. 1

## Description

## Technical Field

The invention relates to the technical field of battery swap stations, and in particular, to a method and an apparatus for estimating a service capability of a battery swap station.

## Background Art

Electric vehicles can be driven by electric energy stored in batteries, which reduces the dependence of vehicles on fossil energy and is an important means to solve the problem of national energy security. Traction batteries are the core of electric vehicles, and the range provided by a traction battery per charge is a major concern for users and companies. Therefore, how to quickly and conveniently supply the traction battery with electric energy becomes an important factor in the use and promotion of electric vehicles. However, the current battery charging technology cannot complete the charging within a few minutes like refueling. Hence, battery swapping through a battery swap station has become an efficient and convenient power supply method for an electric vehicle.

As electric vehicles are being developed rapidly, more and more attention has been paid to user experience in power-up of electric vehicles. Although the battery swap station can directly provide services of fast traction battery replacement for electric vehicles as an ideal power-up service facility, the power capacity of each battery swap station is specific and it is impossible to provide endless electric power. If the service capability of the battery swap station is not estimated, it is likely that the battery swapping cannot be implemented after the user arrives at the battery swap station and the user experience is bad. Therefore, it is necessary to provide a technology for estimating the service capability of the battery swap station to solve this technical problem.

## Summary of the Invention

The technical problem to be solved by the invention is to provide a method and an apparatus for estimating a service capability of a battery swap station. By estimating the service capability of the battery swap station, the method and apparatus enable a user to reasonably select a battery swap station which can timely perform battery swapping, thereby saving battery swap time, improving battery swap efficiency, and improving user experience.

In order to solve the above technical problems, according to one aspect of the invention, a method for estimating a service capability of a battery swap station is provided, the method comprising:

> acquiring initial charging parameters of a battery of a vehicle for which a reservation for battery swapping has been made;
> acquiring a corresponding charging current characteristic curve according to the initial charging parameters, and acquiring inflection point parameters of the curve; and
> calculating, according to the initial charging parameters and the inflection point parameters, the charging completion time of the battery of the vehicle for which a reservation for battery swapping has been made, such that the service capability of the battery swap station is estimated.

Further, the initial charging parameters comprise a maximum charging power of a charger, an initial state of charge (SOC) corresponding to an initial charging state of a battery of a vehicle for which a reservation for battery swapping has been made, and a current state of health (SOH).

Further, the acquiring a corresponding charging current characteristic curve according to the initial charging parameters comprises the step of:

acquiring a corresponding charging current characteristic curve according to the current SOH.

Further, the method further comprises: acquiring an SOC value and a corresponding charging current value and charging voltage value of the battery in the whole charging process under each SOH, obtaining a current characteristic curve by a curve fitting algorithm, and recording the charging voltage value corresponding to each SOC value; wherein the charging current characteristic curve is a curve of battery charging current changing with the SOCs, and each SOH of the battery corresponds to a current characteristic curve.

Further, the inflection point parameters comprise an SOC corresponding to an inflection point, a charging current corresponding to the inflection point, and charging power corresponding to the inflection point, wherein the charging power corresponding to the inflection point is obtained by multiplying the charging current corresponding to the inflection point SOC by the charging voltage corresponding to the inflection point SOC.

Further, the calculating, according to the initial charging parameters and the inflection point parameters, the charging completion time of the battery of the vehicle for which a reservation for battery swapping has been made, such that the service capability of the battery swap station is estimated comprises the steps of:

calculating, according to the initial charging parameters and the inflection point parameters, the charging completion time of the battery of each vehicle for which a reservation for battery swapping has been made;

calculating, according to the charging completion time and battery swap time of the battery of each vehicle for which a reservation for battery swapping has been made, the total battery swap time of all vehicles for which reservations for battery swapping have been made; and

comparing the total battery swap time with a preset time; wherein if the total battery swap time is greater than the preset time, the service capability of the battery swap station cannot meet current battery swap demands of vehicles for which reservations for battery swapping have been made; otherwise, the service capability of the battery swap station meets the current battery swap demands of vehicles for which reservations for battery swapping have been made.

Further, the calculating, according to the initial charging parameters and the inflection point parameters, the charging completion time of the battery of each vehicle for which a reservation for battery swapping has been made comprises the steps of:

assuming that the current characteristic curve comprises M inflection points, where M is an integer greater than or equal to 2, corresponding SOCs at various inflection point are $SOC_1$, $SOC_2 \cdots SOC_{M-1}$ and $SOC_M$ respectively, corresponding charging current values are $Ireq_1$, $Ireq_2 \ldots Ireq_{M-1}$ and $Ireq_M$ respectively, corresponding charging power is P1, P2$\cdots$PM-1 and PM respectively, and the maximum charging power of the charger is P;

dividing, by the M inflection points, the current characteristic curve into M+1 segments, which are respectively a first segment, a second segment, ..., an M-th segment, and an (M+1)-th segment;

wherein the maximum powers acceptable by the battery itself corresponding to different SOCs are different and gradually decrease with increasing of the SOCs; when P is greater than the maximum value of the maximum powers acceptable by the battery, implementing the whole charging process according to the current characteristic curve of the battery; when P is less than the maximum value of the maximum powers acceptable by the battery itself, firstly determining an SOC point corresponding to P on the current characteristic curve, setting the point to $SOC_m$, and when P is less than $SOC_m$, charging the battery according to P; when P is greater than $SOC_m$, charging the battery according to the current characteristic curve; assuming that the SOC that starts charging according to the current characteristic curve is located in the N-th segment, where N is an integer, and $1 \leq N \leq M + 1$, determining N according to P and an inflection point power, and performing segmented calculation of the battery charging completion time specifically as follows:

(1) if $P \geq P1$, then N=1, estimating the battery charging completion time specifically according to the following formula:

$$
\left\{
\begin{aligned}
\Delta t_1 &= \frac{(SOC_1 - SOC_0) * Cr}{Ireq_1} \\
\Delta t_2 &= 2 * \frac{(SOC_2 - SOC_1) * Cr}{Ireq_1 + Ireq_2} \\
&\quad\vdots \\
\Delta t_M &= 2 * \frac{(SOC_M - SOC_{M-1}) * Cr}{Ireq_{M-1} + Ireq_M} \\
\Delta t_{M+1} &= 2 * \frac{(SOC_f - SOC_M) * Cr}{Ireq_M + Ireq_f} \\
\Delta t &= \Delta t_1 + \Delta t_2 + \cdots \Delta t_M + \Delta t_{M+1}
\end{aligned}
\right.
$$

(2) if $Pa \leq P < Pa - 1$, where a=2, 3, 4$\cdots$M, then N = a, estimating the battery charging completion time specifically according to the following formula:

$$\begin{cases} \Delta t_N = \dfrac{(\text{SOC}_m - \text{SOC}_0) * Cr}{\text{Ireq}_m} + 2 * \dfrac{(\text{SOC}_N - \text{SOC}_m) * Cr}{\text{Ireq}_m + \text{Ireq}_N} \\[2mm] \Delta t_{N+1} = 2 * \dfrac{(\text{SOC}_{N+1} - \text{SOC}_N) * Cr}{\text{Ireq}_N + \text{Ireq}_{N+1}} \\[2mm] \quad\quad\quad \vdots \\[2mm] \Delta t_M = 2 * \dfrac{(\text{SOC}_M - \text{SOC}_{M-1}) * Cr}{\text{Ireq}_{M-1} + \text{Ireq}_M} \\[2mm] \Delta t_{M+1} = 2 * \dfrac{(\text{SOC}_f - \text{SOC}_M) * Cr}{\text{Ireq}_M + \text{Ireq}_f} \\[2mm] \Delta t = \Delta t_N + \Delta t_{N+1} \cdots \Delta t_M + \Delta t_{M+1} \end{cases}$$

(3) if P < PM, then N=M+1, estimating the battery charging completion time specifically according to the following formula:

$$\Delta t = \frac{(SOC_m - \text{SOC}_0) * Cr}{\text{Ireq}_m} + 2 * \frac{(\text{SOC}_f - \text{SOC}_M) * Cr}{\text{Ireq}_m + \text{Ireq}_f}$$

wherein in (1)-(3), $\text{SOC}_0$ is an SOC value corresponding to the initial charging time, $\text{SOC}_f$ is an SOC value corresponding to the charging cut-off time, $\text{Ireq}_f$ is an Ireq value corresponding to the charging cut-off time, $\Delta t_1$ is the charging time required for the first segment, $\Delta t_2$ is the charging time required for the second segment, $\Delta t_N$ is the charging time required for the N-th segment, $\Delta t_{N+1}$ is the charging time required for the N+1 -th segment, ..., $\Delta t_M$ is the charging time required for the M-th segment, $\Delta t_{M+1}$ is the charging time required for the M+1 -th segment, $\Delta t$ is the battery charging completion time, $\text{Ireq}_m$ is the maximum output current of the charger, $\text{SOC}_m$ is an SOC value corresponding to $\text{Ireq}_m$ on the current characteristic curve, and Cr is a current rated capacity of the battery.

According to another aspect of the invention, an apparatus for estimating a service capability of a battery swap station is provided, comprising:

a first parameter acquisition module configured to acquire initial charging parameters of a battery of a vehicle for which a reservation for battery swapping has been made;
a second parameter acquisition module configured to acquire a corresponding charging current characteristic curve according to the initial charging parameters, and acquire inflection point parameters of the curve; and
a service capability estimation module configured to calculate, according to the initial charging parameters and the inflection point parameters, the charging completion time of the battery of the vehicle for which a reservation for battery swapping has been made, such that the service capability of the battery swap station is estimated.

Further, the initial charging parameters comprise a maximum charging power of a charger, an initial state of charge (SOC) corresponding to an initial charging state of a battery of a vehicle for which a reservation for battery swapping has been made, and a current state of health (SOH).
Further, the second parameter acquisition module comprises a curve acquisition unit, which is configured to acquire a corresponding charging current characteristic curve according to the current SOH.
Further, the method further comprises: acquiring an SOC value and a corresponding charging current value and charging voltage value of the battery in the whole charging process under each SOH, obtaining a current characteristic curve by a curve fitting algorithm, and recording the charging voltage value corresponding to each SOC value; wherein the charging current characteristic curve is a curve of battery charging current changing with the SOCs, and each SOH of the battery corresponds to a current characteristic curve.
Further, the inflection point parameters comprise an SOC corresponding to an inflection point, a charging current corresponding to the inflection point, and charging power corresponding to the inflection point, wherein the charging power corresponding to the inflection point is obtained by multiplying the charging current corresponding to the inflection point SOC by the charging voltage corresponding to the inflection point SOC.

Further, the service capability estimation module comprises:

a first time calculation unit configured to calculate, according to the initial charging parameters and the inflection point parameters, the charging completion time of the battery of each vehicle for which a reservation for battery swapping has been made;

a second time calculation unit configured to calculate, according to the charging completion time and battery swap time of the battery of each vehicle for which a reservation for battery swapping has been made, the total battery swap time of all vehicles for which reservations for battery swapping have been made; and

a service capability estimation unit configured to compare the total battery swap time with a preset time; wherein if the total battery swap time is greater than the preset time, the service capability of the battery swap station cannot meet current battery swap demands of vehicles for which reservations for battery swapping have been made; otherwise, the service capability of the battery swap station meets the current battery swap demands of vehicles for which reservations for battery swapping have been made.

Further, the first time calculation unit is further configured to perform the steps of:

assuming that the current characteristic curve comprises M inflection points, where M is an integer greater than or equal to 2, corresponding SOCs at various inflection point are $SOC_1$, $SOC_2 \cdots SOC_{M-1}$ and $SOC_M$ respectively, corresponding charging current values are $Ireq_1$, $Ireq_2 \cdots Ireq_{M-1}$ and $Ireq_M$ respectively, corresponding charging power is P1, P2···PM-1 and PM respectively, and the maximum charging power of the charger is P;

dividing, by the M inflection points, the current characteristic curve into M+1 segments, which are respectively a first segment, a second segment, ..., an M-th segment, and an (M+1)-th segment;

wherein the maximum powers acceptable by the battery itself corresponding to different SOCs are different and gradually decrease with increasing of the SOCs; when P is greater than the maximum value of the maximum powers acceptable by the battery, implementing the whole charging process according to the current characteristic curve of the battery; when P is less than the maximum value of the maximum powers acceptable by the battery itself, firstly determining an SOC point corresponding to P on the current characteristic curve, setting the point to $SOC_m$, and when P is less than $SOC_m$, charging the battery according to P; when P is greater than $SOC_m$, charging the battery according to the current characteristic curve; assuming that the SOC that starts charging according to the current characteristic curve is located in the N-th segment, where N is an integer, and $1 \le N \le M + 1$, determining N according to P and an inflection point power, and performing segmented calculation of the battery charging completion time specifically as follows:

(1) if $P \ge P1$, then N=1, estimating the battery charging completion time specifically according to the following formula:

$$\begin{cases} \Delta t_1 = \dfrac{(SOC_1 - SOC_0) * Cr}{Ireq_1} \\ \Delta t_2 = 2 * \dfrac{(SOC_2 - SOC_1) * Cr}{Ireq_1 + Ireq_2} \\ \quad\quad\quad \vdots \\ \Delta t_M = 2 * \dfrac{(SOC_M - SOC_{M-1}) * Cr}{Ireq_{M-1} + Ireq_M} \\ \Delta t_{M+1} = 2 * \dfrac{(SOC_f - SOC_M) * Cr}{Ireq_M + Ireq_f} \\ \Delta t = \Delta t_1 + \Delta t_2 + \cdots \Delta t_M + \Delta t_{M+1} \end{cases}$$

(2) if $Pa \le P < Pa - 1$, where a=2, 3, 4···M, then N = a, estimating the battery charging completion time specifically according to the following formula:

$$
\begin{cases}
\Delta t_N = \dfrac{(SOC_m - SOC_0) * Cr}{Ireq_m} + 2 * \dfrac{(SOC_N - SOC_m) * Cr}{Ireq_m + Ireq_N} \\[2mm]
\Delta t_{N+1} = 2 * \dfrac{(SOC_{N+1} - SOC_N) * Cr}{Ireq_N + Ireq_{N+1}} \\[2mm]
\quad\quad\quad \vdots \\[2mm]
\Delta t_M = 2 * \dfrac{(SOC_M - SOC_{M-1}) * Cr}{Ireq_{M-1} + Ireq_M} \\[2mm]
\Delta t_{M+1} = 2 * \dfrac{(SOC_f - SOC_M) * Cr}{Ireq_M + Ireq_f} \\[2mm]
\Delta t = \Delta t_N + \Delta t_{N+1} \cdots \Delta t_M + \Delta t_{M+1}
\end{cases}
$$

(3) if P < PM, then N=M+1, estimating the battery charging completion time specifically according to the following formula:

$$
\Delta t = \frac{(SOC_m - SOC_0) * Cr}{Ireq_m} + 2 * \frac{(SOC_f - SOC_M) * Cr}{Ireq_m + Ireq_f}
$$

wherein in (1)-(3), $SOC_0$ is an SOC value corresponding to the initial charging time, $SOC_f$ is an SOC value corresponding to the charging cut-off time, $Ireq_f$ is an Ireq value corresponding to the charging cut-off time, $\Delta t_1$ is the charging time required for the first segment, $\Delta t_2$ is the charging time required for the second segment, $\Delta t_N$ is the charging time required for the N-th segment, $\Delta t_{N+1}$ is the charging time required for the N+1-th segment, ..., $\Delta t_M$ is the charging time required for the M-th segment, $\Delta t_{M+1}$ is the charging time required for the M+1 -th segment, $\Delta t$ is the battery charging completion time, $Ireq_m$ is the maximum output current of the charger, $SOC_m$ is an SOC value corresponding to $Ireq_m$ on the current characteristic curve, and Cr is a current rated capacity of the battery.

According to a further aspect of the invention, a controller is further provided, which comprises a memory and a processor, wherein the memory stores a computer program that, when executed by the processor, is capable of implementing the steps of the method.

According to a further aspect of the invention, a computer readable storage medium for storing computer instructions is further provided, wherein the instructions, when executed by a computer or a processor, implement the steps of the method.

The invention has obvious advantages and beneficial effects as compared with the prior art. By means of the technical solution, the method and apparatus for estimating a service capability of a battery swap station according to the invention can achieve considerable technical progress and practicability, have wide industrial utilization value, and at least have the following advantages:

the invention achieves the estimation of the charging completion time of the traction battery, fits a current characteristic curve according to the (Ireq, Soc) relation under different SOHs of the battery, and performs the estimation of the charging completion time of the traction battery on the basis of the current characteristic curve, thus having high reliability and precision; on this basis, estimating the battery swap service capability of the battery swap station can provide the basis for operation arrangement, and improve the effectiveness and timeliness of order distribution, enabling a user to reasonably select a battery swap station which can timely perform battery swapping, thereby saving user time, improving battery swap efficiency, and improving user experience.

The above description is merely an overview of the technical solutions of the invention. In order that the technical means of the invention can be more clearly understood and implemented in accordance with the contents of the specification, and in order that the above and other objectives, features and advantages of the invention can be more clearly understood, the following detailed description is made by providing preferred embodiments with reference to the accompanying drawings.

## Brief Description of the Drawings

FIG. 1 is a schematic diagram of a method for estimating a service capability of a battery swap station according to an embodiment of the invention;
FIG. 2 is a schematic diagram of a current characteristic curve according to an embodiment of the invention; and
FIG. 3 is a schematic diagram of an apparatus for estimating a service capability of a battery swap station according to an embodiment of the invention.

## Detailed Description of Embodiments

In order to further illustrate the technical means and effects adopted by the invention to achieve the intended objectives of the invention, the following is a detailed description of the specific implementation and effects of a method and an apparatus for estimating a service capability of a battery swap station provided in accordance with the invention with reference to the accompanying drawings and preferred embodiments.

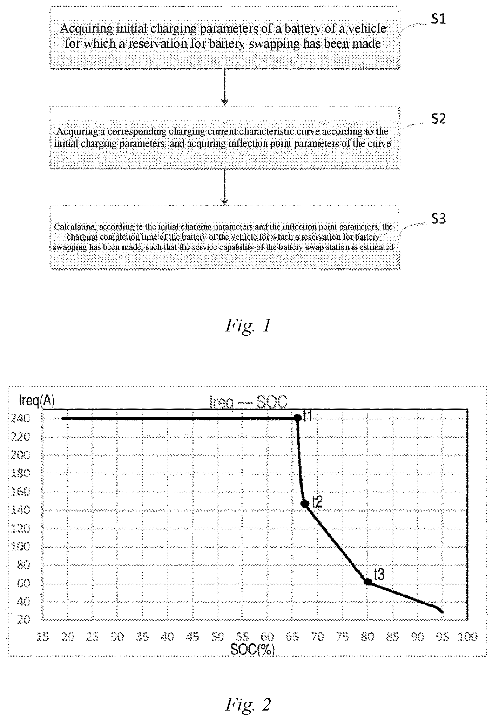

As shown in FIG. 1, the invention provides a method for estimating a service capability of a battery swap station, the method comprising:

Step S1. acquiring initial charging parameters of a battery of a vehicle for which a reservation for battery swapping has been made;

wherein the initial charging parameters comprise a maximum charging power of a charger, an initial SOC corresponding to an initial charging state of a battery of a vehicle for which a reservation for battery swapping has been made, and a current SOH, and the SOH remains unchanged during one-time charging. Specifically, a battery management system (BMS) can be used to obtain the initial SOC (also known as battery remaining capacity, representing the ratio of the remaining capacity after the battery is used for a period of time or has not been used for a long term to the capacity of its fully charged state, and usually indicated by percentage) which corresponds to an initial state of charging of the battery of the vehicle for which a reservation for battery swapping has been made, and the current SOH (Section of Health, that is, the capacity state, health degree and performance state of the battery, i.e., the percentage of the capacity of the fully charged battery relative to the rated capacity, which is 100% for a newly manufactured battery and 0% for a completely scrapped battery).

It should be noted that if the distance between the vehicle and the battery swap station exceeds a preset distance, the current SOC and SOH of the battery and the distance between the current position of the vehicle and the battery swap station can be obtained, and the initial charging parameters can be obtained through correction calculation.

Step S2. acquiring a corresponding charging current characteristic curve according to the initial charging parameters, and acquiring inflection point parameters of the curve; and

specifically, acquiring a corresponding charging current characteristic curve according to the current SOH.

The current characteristic curve can be generated by the steps of: acquiring an SOC value and a corresponding charging current value and charging voltage value of the battery in the whole charging process under each SOH, obtaining a current characteristic curve by a curve fitting algorithm, and recording the charging voltage value corresponding to each SOC value, wherein the charging current characteristic curve is a curve of battery charging current changing with the SOCs, and each SOH of the battery corresponds to a current characteristic curve. The current characteristic curve is also related to a charging strategy adopted by a charging station. In the implementation process of the method, the battery swap station adopts the same charging strategy to avoid the influence of the charging strategy on the calculation process, thereby improving the calculation efficiency and accuracy.

It should be noted that the generation process of the current characteristic curve has a certain degree of self-learning ability. A set of default parameters will be initialized before the charging estimation is performed for the first time; then, as the charging service proceeds, the current characteristic curve (Ireq, SOC) and corresponding charging voltage, power and other data under different SOHs will be automatically recorded and continuously used for updating of its own parameters, which is equivalent to having the function of self-learning.

the inflection point parameters comprise an SOC corresponding to an inflection point, a charging current corresponding to the inflection point, and charging power corresponding to the inflection point, wherein the charging power corresponding to the inflection point is obtained by multiplying the charging current corresponding to the inflection point SOC by the charging voltage corresponding to the inflection point SOC.

Step S3. calculating, according to the initial charging parameters and the inflection point parameters, the charging completion time of the battery of the vehicle for which a reservation for battery swapping has been made, such that the service capability of the battery swap station is estimated.

Specifically, the step S3 comprises substeps of:

Step S301. calculating, according to the initial charging parameters and the inflection point parameters, the charging completion time of the battery of each vehicle for which a reservation for battery swapping has been made;
assuming that the current characteristic curve comprises M inflection points, where M is an integer greater than or equal to 2, corresponding SOCs at various inflection point are $SOC_1$, $SOC_2 \cdots SOC_{M-1}$ and $SOC_M$ respectively, corresponding charging current values are $Ireq_1$, $Ireq_2$,..., $Ireq_{M-1}$ and $Ireq_M$ respectively, corresponding charging power is P1, P2$\cdots$PM-1 and PM respectively, and the maximum charging power of the charger is P;
dividing, by the M inflection points, the current characteristic curve into M+1 segments, which are respectively a first segment, a second segment, ..., an M-th segment, and an (M+1)-th segment;
wherein battery charging is mainly restricted by two factors:

(1) a maximum charging power P of the charger;
(2) maximum powers that the battery can accept by itself. The maximum power acceptable by the battery corresponding to different SOCs are different and gradually decrease with increasing of the SOCs.

According to the invention, when the battery charging completion time is estimated, the two factors are comprehensively considered, and when the maximum power P output by the charger is greater than the maximum value of the maximum powers acceptable by the battery itself, the whole charging process is implemented according to the current characteristic curve of the battery; if the maximum charging power P of the charger is less than the maximum value of the maximum charging power acceptable by the battery, an SOC point corresponding to the maximum charging power P of the charger on the current characteristic curve needs to be found, the point is set to $SOC_m$, and when P is less than $SOC_m$, the battery is charged according to the maximum charging power of the charger; and when P is greater than $SOC_m$, the battery is charged according to the current characteristic curve. Assuming that the SOC that starts charging according to the current characteristic curve is located in the N-th segment, where N is an integer, and $1 \le N \le M + 1$, N is determined according to a maximum charging power P of the charger and an inflection point power, and segmented calculation of the battery charging completion time is performed specifically as follows:

(1) if $P \ge P1$, then N=1, estimating the battery charging completion time specifically according to the following formula:

$$
\left\{
\begin{array}{l}
\Delta t_1 = \dfrac{(SOC_1 - SOC_0) * Cr}{Ireq_1} \\[4mm]
\Delta t_2 = 2 * \dfrac{(SOC_2 - SOC_1) * Cr}{Ireq_1 + Ireq_2} \\[2mm]
\vdots \\[2mm]
\Delta t_M = 2 * \dfrac{(SOC_M - SOC_{M-1}) * Cr}{Ireq_{M-1} + Ireq_M} \\[4mm]
\Delta t_{M+1} = 2 * \dfrac{(SOC_f - SOC_M) * Cr}{Ireq_M + Ireq_f} \\[4mm]
\Delta t = \Delta t_1 + \Delta t_2 + \cdots \Delta t_M + \Delta t_{M+1}
\end{array}
\right.
$$

(2) if $Pa \le P < Pa - 1$, where $a=2, 3, 4 \cdots M$, then $N = a$, estimating the battery charging completion time specifically according to the following formula:

$$\begin{cases} \Delta t_N = \dfrac{(SOC_m - SOC_0) * Cr}{Ireq_m} + 2 * \dfrac{(SOC_N - SOC_m) * Cr}{Ireq_m + Ireq_N} \\[3mm] \Delta t_{N+1} = 2 * \dfrac{(SOC_{N+1} - SOC_N) * Cr}{Ireq_N + Ireq_{N+1}} \\[2mm] \qquad\qquad \vdots \\[2mm] \Delta t_M = 2 * \dfrac{(SOC_M - SOC_{M-1}) * Cr}{Ireq_{M-1} + Ireq_M} \\[3mm] \Delta t_{M+1} = 2 * \dfrac{(SOC_f - SOC_M) * Cr}{Ireq_M + Ireq_f} \\[2mm] \Delta t = \Delta t_N + \Delta t_{N+1} \cdots \Delta t_M + \Delta t_{M+1} \end{cases}$$

(3) if P < PM, then N=M+1, estimating the battery charging completion time specifically according to the following formula:

$$\Delta t = \frac{(SOC_m - SOC_0) * Cr}{Ireq_m} + 2 * \frac{(SOC_f - SOC_M) * Cr}{Ireq_m + Ireq_f}$$

wherein in (1)-(3), $SOC_0$ is an SOC value corresponding to the initial charging time, $SOC_f$ is an SOC value corresponding to the charging cut-off time, $SOC_f$ can be preset by the charging station or adjusted according to specific needs of users, $Ireq_f$ is an Ireq value corresponding to the charging cut-off time, $\Delta t_1$ is the charging time required for the first segment, $\Delta t_2$ is the charging time required for the second segment, $\Delta t_N$ is the charging time required for the N-th segment, $\Delta t_{N+1}$ is the charging time required for the N+1-th segment, ..., $\Delta t_M$ is the charging time required for the M-th segment, $\Delta t_{M+1}$ is the charging time required for the M+1-th segment, $\Delta t$ is the battery charging completion time, $Ireq_m$ is the maximum output current of the charger, $SOC_m$ is an SOC value corresponding to $Ireq_m$ on the current characteristic curve, and Cr is a current rated capacity of the battery.

Step S302. calculating, according to the charging completion time $\Delta t_n$ and battery swap time $\Delta t_{swap}$ of the battery of each vehicle for which a reservation for battery swapping has been made, the total battery swap time $\Delta t_{total}$ of all vehicles for which reservations for battery swapping have been made,

$$\Delta t_{total} = \sum_1^N \left( \Delta t_n + \Delta t_{swap} \right)$$

where N is the total number of vehicles for which reservations for battery swapping have been made, n=1, 2, 3···N; and $\Delta t_{swap}$ is the battery swap time of each vehicle and is a known quantity.

Step S303. comparing the total battery swap time with a preset time; wherein if the total battery swap time is greater than the preset time, the service capability of the battery swap station cannot meet current battery swap demands of vehicles for which reservations for battery swapping have been made; otherwise, the service capability of the battery swap station meets the current battery swap demands of vehicles for which reservations for battery swapping have been made.

It should be noted that during the charging of the battery, the ambient temperature may also affects the charging completion time of the battery. In order to avoid the influence of the change of ambient temperature on the calculation of the charging completion time, water cooling can be used as the charging cooling of the battery in the station to stabilize the temperature of an internal battery cell within the preset temperature range. For example, the preset temperature range can be 25°C-40°C. The specific temperature range setting and the method adopted for the location temperature within the preset range can be set according to the specific conditions of the battery swap station.

How to calculate the charging completion time of each battery will be described in detail below with reference to a specific example:

As shown in FIG. 2, there are three inflection points on the current characteristic curve of the traction battery in the battery swap station, corresponding to the time of t1, t2 and t3, the corresponding SOCs are 66.5%, 67.5% and 80% respectively, and the corresponding charging currents are Ireq1, Ireq2 and Ireq3 respectively; charging voltages are VI, V2 and V3 respectively; and the corresponding charging power is P1, P2 and P3 respectively. It should be noted that since the charging voltage of the battery rises slowly with the SOC while the current drops faster than the voltage rises, it can be seen that the maximum charging power P1 will be reached at the time t1.

If the initial charging time is t0, the corresponding initial SOC is $SOC_0$, a charging cut-off target SOC is $SOC_f$, and the maximum charging power of the charger is P, then the segmented calculation is as follows:

(a) when $P \geq P1$, the SOC that starts charging according to the current characteristic curve is located in the N-th segment and located in the first segment, and the battery charging completion time is estimated by the following formula:

$$\begin{cases} \Delta t_1 = \dfrac{(SOC_1 - SOC_0) * Cr}{Ireq_1} \\ \Delta t_2 = 2 * \dfrac{(SOC_2 - SOC_1) * Cr}{Ireq_1 + Ireq_2} \\ \Delta t_3 = 2 * \dfrac{(SOC_3 - SOC_2) * Cr}{Ireq_2 + Ireq_3} \\ \Delta t_4 = 2 * \dfrac{(SOC_f - SOC_3) * Cr}{Ireq_3 + Ireq_f} \\ \Delta t = \Delta t_1 + \Delta t_2 + \Delta t_3 + \Delta t_4 \end{cases}$$

(b) when $P2 \leq P < P1$, the SOC that starts charging according to the current characteristic curve is located in the N-th segment and located in the second segment, then the maximum output current $Ireq_m$ of the charger is obtained and the SOC value $SOC_m$ corresponding to $Ireq_m$ is found from the current characteristic curve shown in FIG. 2, and the battery charging completion time is estimated by the following formula:

$$\begin{cases} \Delta t2 = \dfrac{(SOC_m - SOC_0) * Cr}{Ireq_m} + 2 * \dfrac{(SOC_2 - SOC_m) * Cr}{Ireq_m + Ireq_2} \\ \Delta t_3 = 2 * \dfrac{(SOC_3 - SOC_2) * Cr}{Ireq_2 + Ireq_3} \\ \Delta t_4 = 2 * \dfrac{(SOC_f - SOC_3) * Cr}{Ireq_3 + Ireq_f} \\ \Delta t = \Delta t_2 + \Delta t_3 + \Delta t_4 \end{cases}$$

(c) when $P3 \leq P < P2$, the SOC that starts charging according to the current characteristic curve is located in the N-th segment and located in the third segment, $Ireq_m$ and $SOC_m$ are obtained likewise as in (b), and the battery charging completion time is estimated by the following formula:

$$\begin{cases} \Delta t_3 = \dfrac{(SOC_m - SOC_0) * Cr}{Ireq_m} + 2 * \dfrac{(SOC_3 - SOC_m) * Cr}{Ireq_m + Ireq_3} \\ \Delta t_4 = 2 * \dfrac{(SOC_f - SOC_3) * Cr}{Ireq_3 + Ireq_f} \\ \Delta t = \Delta t_3 + \Delta t_4 \end{cases}$$

(d) when $P < P2$, the SOC that starts charging according to the current characteristic curve is located in the N-th segment and located in the third segment, $Ireq_m$ and $SOC_m$ are obtained likewise as in (b), and the battery charging completion time is estimated by the following formula:

$$\Delta t = \frac{(SOC_m - SOC_0) * Cr}{Ireq_m} + 2 * \frac{(SOC_f - SOC_3) * Cr}{Ireq_m + Ireq_f}$$

The charging completion time of a single battery can be calculated through the above calculation. Similarly, the charging completion time of batteries of all vehicles for which reservations for battery swapping have been made is calculated and brought into step S302 to calculate the total battery swap time, thereby estimating the service output capability of the battery swap station.

The method according to the invention can provide a reference for a cloud scheduling system to allocate reserved orders, and obtains the number of vehicles for which reservations for battery swapping have been made to a battery swap station through communication with the cloud scheduling system, namely the number of orders. If the total battery swap time is greater than the preset time, the service capability of the battery swap station cannot meet the battery swap demand of the current vehicles for which reservations for battery swapping have been made; that is, the orders allocated by the cloud scheduling system cannot be received, the order allocation of the cloud scheduling system is unreasonable, so that feedback is made to the cloud scheduling system, and the cloud scheduling system will re-allocate orders. Correspondingly, the user will also reserve a battery swap station that can perform battery swapping, thus avoiding the situation that the cloud scheduling system allocates too many battery swap orders to a single battery swap station, such that the battery swap station cannot meet all the order requirements, and users who drive vehicles into the battery swap station cannot receive battery swap services because the battery swap service capability of the battery swap station cannot meet the current demand. The method enables the cloud scheduling system to reasonably distribute user orders to the battery swap stations for battery swap services, thereby saving battery swap time, improving battery swap efficiency for users and improving user experience.

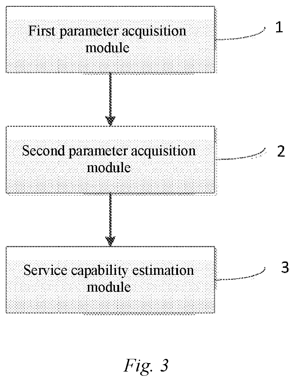

As shown in FIG. 3, the invention provides an apparatus for estimating a service capability of a battery swap station, the apparatus comprising a first parameter acquisition module 1, a second parameter acquisition module 2 and a service capability estimation module 3.

The first parameter acquisition module 1 is configured to acquire initial charging parameters of a battery of a vehicle for which a reservation for battery swapping has been made; and the initial charging parameters comprise a maximum charging power of a charger, an initial SOC corresponding to an initial charging state of a battery of a vehicle for which a reservation for battery swapping has been made, and a current SOH.

It should be noted that if the distance between the vehicle and the battery swap station exceeds a preset distance, the current SOC and SOH of the battery and the distance between the current position of the vehicle and the battery swap station can be obtained, and the initial charging parameters can be obtained through correction calculation.

The second parameter acquisition module 2 is configured to acquire a corresponding charging current characteristic curve according to the initial charging parameters, and acquire inflection point parameters of the curve; and the second parameter acquisition module 2 comprises a curve acquisition unit, which is configured to acquire a corresponding charging current characteristic curve according to the current SOH.

the apparatus further comprises a characteristic curve generation module, which is configured to acquire an SOC value and a corresponding charging current value and charging voltage value of the battery in the whole charging process under each SOH, obtain a current characteristic curve by a curve fitting algorithm, and record the charging voltage value corresponding to each SOC value; wherein the charging current characteristic curve is a curve of battery charging current changing with the SOCs, and each SOH of the battery corresponds to a current characteristic curve. The current characteristic curve is also related to a charging strategy adopted by a charging station. In the implementation process of the method, the battery swap station adopts the same charging strategy to avoid the influence of the charging strategy on the calculation process, thereby improving the calculation efficiency and accuracy.

The characteristic curve generation module has a certain degree of self-learning ability. A set of default parameters will be initialized before the charging estimation is performed for the first time; then, as the charging service proceeds, the module will automatically record (Ireq, SOC) and corresponding charging voltage, power and other data under different SOHs and continuously use the same for updating of its own parameters, which is equivalent to having the function of self-learning;

the inflection point parameters comprise an SOC corresponding to an inflection point, a charging current corresponding to the inflection point, and charging power corresponding to the inflection point, wherein the charging power corresponding to the inflection point is obtained by multiplying the charging current corresponding to the inflection point SOC by the charging voltage corresponding to the inflection point SOC.

The service capability estimation module 4 is configured to calculate, according to the initial charging parameters and the inflection point parameters, the charging completion time of the battery of the vehicle for which a reservation for battery swapping has been made, such that the service capability of the battery swap station is estimated. The service capability estimation module 4 comprises: a first time calculation unit configured to calculate, according to the initial charging parameters and the inflection point parameters, the charging completion time of the battery of each vehicle for which a reservation for battery swapping has been made; a second time calculation unit configured to calculate, according to the charging completion time and battery swap time of the battery of each vehicle for which a reservation for battery swapping has been made, the total battery swap time of all vehicles for which reservations for battery swapping have been made; and a service capability estimation unit configured to compare the total battery swap time with a preset time; wherein if the total battery swap time is greater than the preset time, the service capability of the battery swap station cannot meet current battery swap demands of vehicles for which reservations for battery swapping have been made; otherwise, the service capability of the battery swap station meets the current battery swap demands of vehicles for which reservations for battery swapping have been made.

the first time calculation unit is specifically configured to perform the steps of:

assuming that the current characteristic curve comprises M inflection points, where M is an integer greater than or equal to 2, corresponding SOCs at various inflection point are $SOC_1$, $SOC_2 \cdots SOC_{M-1}$ and $SOC_M$ respectively, corresponding charging current values are $Ireq_1$, $Ireq_2 \cdots Ireq_{M-1}$ and $Ireq_M$ respectively, corresponding charging power is P1, P2···PM-1 and PM respectively, and the maximum charging power of the charger is P; and dividing, by the M inflection points, the current characteristic curve into M+1 segments, which are respectively a first segment, a second segment, ..., an M-th segment, and an (M+1)-th segment.

wherein battery charging is mainly restricted by two factors:

(1) a maximum charging power P of the charger;
(2) maximum powers that the battery can accept by itself. The maximum powers acceptable by the battery corresponding to different SOCs are different and gradually decrease with increasing of the SOCs.

According to the invention, when the battery charging completion time is estimated, the two factors are comprehensively considered, and when the maximum power P output by the charger is greater than the maximum value of the maximum powers acceptable by the battery itself, the whole charging process is implemented according to the current characteristic curve of the battery; if the maximum charging power P of the charger is less than the maximum value of the maximum charging power acceptable by the battery, an SOC point corresponding to the maximum charging power P of the charger on the current characteristic curve needs to be found, the point is set to $SOC_m$, and when P is less than $SOC_m$, the battery is charged according to the maximum charging power of the charger; and when P is greater than $SOC_m$, the battery is charged according to the current characteristic curve. Assuming that the SOC that starts charging according to the current characteristic curve is located in the N-th segment, where N is an integer, and $1 \le N \le M + 1$, N is determined according to a maximum charging power P of the charger and an inflection point power, and segmented calculation of the battery charging completion time is performed specifically as follows:

(1) if $P \ge P1$, then N=1, estimating the battery charging completion time specifically according to the following formula:

$$
\begin{cases}
\Delta t_1 = \dfrac{(SOC_1 - SOC_0) * Cr}{Ireq_1} \\[2mm]
\Delta t_2 = 2 * \dfrac{(SOC_2 - SOC_1) * Cr}{Ireq_1 + Ireq_2} \\[2mm]
\quad\quad\quad\quad \vdots \\[2mm]
\Delta t_M = 2 * \dfrac{(SOC_M - SOC_{M-1}) * Cr}{Ireq_{M-1} + Ireq_M} \\[2mm]
\Delta t_{M+1} = 2 * \dfrac{(SOC_f - SOC_M) * Cr}{Ireq_M + Ireq_f} \\[2mm]
\Delta t = \Delta t_1 + \Delta t_2 + \cdots \Delta t_M + \Delta t_{M+1}
\end{cases}
$$

(2) if $Pa \le P < Pa - 1$, where a=2, 3, 4···M, then N = a, estimating the battery charging completion time specifically according to the following formula:

$$\begin{cases} \Delta t_N = \dfrac{(\mathrm{SOC}_m - \mathrm{SOC}_0) * Cr}{\mathrm{Ireq}_m} + 2 * \dfrac{(\mathrm{SOC}_N - \mathrm{SOC}_m) * Cr}{\mathrm{Ireq}_m + \mathrm{Ireq}_N} \\ \Delta t_{N+1} = 2 * \dfrac{(\mathrm{SOC}_{N+1} - \mathrm{SOC}_N) * Cr}{\mathrm{Ireq}_N + \mathrm{Ireq}_{N+1}} \\ \vdots \\ \Delta t_M = 2 * \dfrac{(\mathrm{SOC}_M - \mathrm{SOC}_{M-1}) * Cr}{\mathrm{Ireq}_{M-1} + \mathrm{Ireq}_M} \\ \Delta t_{M+1} = 2 * \dfrac{(\mathrm{SOC}_f - \mathrm{SOC}_M) * Cr}{\mathrm{Ireq}_M + \mathrm{Ireq}_f} \\ \Delta t = \Delta t_N + \Delta t_{N+1} \cdots \Delta t_M + \Delta t_{M+1} \end{cases}$$

(3) if P < PM, then N=M+1, estimating the battery charging completion time specifically according to the following formula:

$$\Delta t = \dfrac{(SOC_m - \mathrm{SOC}_0) * Cr}{\mathrm{Ireq}_m} + 2 * \dfrac{(\mathrm{SOC}_f - \mathrm{SOC}_M) * Cr}{\mathrm{Ireq}_m + \mathrm{Ireq}_f}$$

wherein in (1)-(3), $SOC_0$ is an SOC value corresponding to the initial charging time, $SOC_f$ is an SOC value corresponding to the charging cut-off time, $SOC_f$ can be preset by the charging station or adjusted according to specific needs of users, $Ireq_f$ is an Ireq value corresponding to the charging cut-off time, $\Delta t_1$ is the charging time required for the first segment, $\Delta t_2$ is the charging time required for the second segment, $\Delta t_N$ is the charging time required for the N-th segment, $\Delta t_{N+1}$ is the charging time required for the N+1-th segment, ..., $\Delta t_M$ is the charging time required for the M-th segment, $\Delta t_{M+1}$ is the charging time required for the M+1-th segment, $\Delta t$ is the battery charging completion time, $Ireq_m$ is the maximum output current of the charger, $SOC_m$ is an SOC value corresponding to $Ireq_m$ on the current characteristic curve, and Cr is a current rated capacity of the battery.

It should be noted that during the charging of the battery, the ambient temperature may also affects the charging completion time of the battery. In order to avoid the influence of the change of ambient temperature on the calculation of the charging completion time, water cooling can be used as the charging cooling of the battery in the station to stabilize the temperature of an internal battery cell within the preset temperature range. For example, the preset temperature range can be 25°C-40°C. The specific temperature range setting and the method adopted for the location temperature within the preset range can be set according to the specific conditions of the battery swap station.

How the first time calculation unit calculates the charging completion time of a single battery will be described in detail below with reference to a specific example:

as shown in FIG. 2, there are three inflection points on the current characteristic curve of the traction battery in the battery swap station, corresponding to the time of t1, t2 and t3, the corresponding SOCs are 66.5%, 67.5% and 80% respectively, and the corresponding charging currents are Ireq1, Ireq2 and Ireq3 respectively; charging voltages are VI, V2 and V3 respectively; and the corresponding charging power is P1, P2 and P3 respectively. It should be noted that since the charging voltage of the battery rises slowly with the SOC while the current drops faster than the voltage rises, it can be seen that the maximum charging power P1 will be reached at the time t1.

If the initial charging time is t0, the corresponding initial SOC is $SOC_0$, a charging cut-off target SOC is $SOC_f$, and the maximum charging power of the charger is P, then the segmented calculation is as follows:

(a) when P ≥ P1, the SOC that starts charging according to the current characteristic curve is located in the N-th segment and located in the first segment, and the battery charging completion time is estimated by the following formula:

$$\begin{cases} \Delta t_1 = \dfrac{(SOC_1 - SOC_0) * Cr}{Ireq_1} \\[2mm] \Delta t_2 = 2 * \dfrac{(SOC_2 - SOC_1) * Cr}{Ireq_1 + Ireq_2} \\[2mm] \Delta t_3 = 2 * \dfrac{(SOC_3 - SOC_2) * Cr}{Ireq_2 + Ireq_3} \\[2mm] \Delta t_4 = 2 * \dfrac{(SOC_f - SOC_3) * Cr}{Ireq_3 + Ireq_f} \\[2mm] \Delta t = \Delta t_1 + \Delta t_2 + \Delta t_3 + \Delta t_4 \end{cases}$$

(b) when $P2 \le P < P1$, the SOC that starts charging according to the current characteristic curve is located in the N-th segment and located in the second segment, then the maximum output current $Ireq_m$ of the charger is obtained and the SOC value $SOC_m$ corresponding to $Ireq_m$ is found from the current characteristic curve shown in FIG. 2, and the battery charging completion time is estimated by the following formula:

$$\begin{cases} \Delta t2 = \dfrac{(SOC_m - SOC_0) * Cr}{Ireq_m} + 2 * \dfrac{(SOC_2 - SOC_m) * Cr}{Ireq_m + Ireq_2} \\[2mm] \Delta t_3 = 2 * \dfrac{(SOC_3 - SOC_2) * Cr}{Ireq_2 + Ireq_3} \\[2mm] \Delta t_4 = 2 * \dfrac{(SOC_f - SOC_3) * Cr}{Ireq_3 + Ireq_f} \\[2mm] \Delta t = \Delta t_2 + \Delta t_3 + \Delta t_4 \end{cases}$$

(c) when $P3 \le P < P2$, the SOC that starts charging according to the current characteristic curve is located in the N-th segment and located in the third segment, $Ireq_m$ and $SOC_m$ are obtained likewise as in (b), and the battery charging completion time is estimated by the following formula:

$$\begin{cases} \Delta t_3 = \dfrac{(SOC_m - SOC_0) * Cr}{Ireq_m} + 2 * \dfrac{(SOC_3 - SOC_m) * Cr}{Ireq_m + Ireq_3} \\[2mm] \Delta t_4 = 2 * \dfrac{(SOC_f - SOC_3) * Cr}{Ireq_3 + Ireq_f} \\[2mm] \Delta t = \Delta t_3 + \Delta t_4 \end{cases}$$

(d) when $P < P2$, the SOC that starts charging according to the current characteristic curve is located in the N-th segment and located in the third segment, $Ireq_m$ and $SOC_m$ are obtained likewise as in (b), and the battery charging completion time is estimated by the following formula:

$$\Delta t = \dfrac{(SOC_m - SOC_0) * Cr}{Ireq_m} + 2 * \dfrac{(SOC_f - SOC_3) * Cr}{Ireq_m + Ireq_f}$$

The charging completion time of a single battery can be calculated through the above calculation. Similarly, the charging completion time of batteries of all vehicles for which reservations for battery swapping have been made is calculated, and then the total battery swap time is calculated by the second time calculation unit, such that the service output capability of the battery swap station is estimated by the service capability estimation unit. The apparatus according to the invention can provide a reference for a cloud scheduling system to allocate reserved orders, and obtains the number of vehicles for which reservations for battery swapping have been made to a battery swap station through communication with the cloud scheduling system, namely the number of orders. If the total battery swap time is greater than the preset time, the service capability of the battery swap station cannot meet the battery swap demand of the current vehicles for which reservations for battery swapping have been made; that is, the orders allocated by the cloud scheduling system cannot be received, the order allocation of the cloud scheduling system is unreasonable, so that feedback is made to the cloud scheduling system, and the cloud scheduling system will re-allocate orders. Correspondingly, the user will also reserve a battery swap station that can perform battery swapping, thus avoiding the situation where the cloud scheduling system allocates too many battery swap orders to a single battery swap station, so that the battery swap station cannot meet all the order requirements, and users who drive vehicles into the battery swap station cannot receive battery swap services because the battery swap service capability of the battery swap station cannot meet the current demand. The apparatus enables the cloud scheduling system to reasonably distribute user orders to the battery swap stations for battery swap services, thereby saving battery swap time, improving battery swap efficiency for users and improving user experience.

The invention further provides a controller, which comprises a memory and a processor, wherein the memory stores a computer program that, when executed by the processor, is capable of implementing the steps of the method.

The invention further provides a computer readable storage medium for storing computer instructions, wherein the instructions, when executed by a computer or a processor, implement the steps of the method.

The above descriptions are merely preferred embodiments of the invention and are not intended to limit the invention in any form. Although the invention has been disclosed as above by means of the preferred embodiments, these embodiments are not intended to limit the invention. Any person skilled in the art may make some alterations or modifications to the technical contents disclosed above without departing from the technical solutions of the invention so as to arrive at equivalent embodiments with equivalent changes. However, any simple amendments, equivalent changes and modifications made to the above embodiments according to the technical essence of the invention without departing from the content of the technical solution of the invention shall fall within the scope of the technical solution of the invention.

**Claims**

1. A method for estimating a service capability of a battery swap station, **characterized in that**, the method comprises:

   acquiring initial charging parameters of a battery of a vehicle for which a reservation for battery swapping has been made;
   acquiring a corresponding charging current characteristic curve according to the initial charging parameters, and acquiring inflection point parameters of the curve; and
   calculating, according to the initial charging parameters and the inflection point parameters, the charging completion time of the battery of the vehicle for which a reservation for battery swapping has been made, such that the service capability of the battery swap station is estimated.

2. The method for estimating a service capability of a battery swap station according to claim 1, **characterized in that**, the initial charging parameters comprise a maximum charging power of a charger, an initial state of charge (SOC) corresponding to an initial charging state of a battery of a vehicle for which a reservation for battery swapping has been made, and a current state of health (SOH).

3. The method for estimating a service capability of a battery swap station according to claim 2, **characterized in that**, the acquiring a corresponding charging current characteristic curve according to the initial charging parameters comprises the step of:
   acquiring a corresponding charging current characteristic curve according to the current SOH.

4. The method for estimating a service capability of a battery swap station according to claim 2, **characterized in that**, the method further comprises: acquiring an SOC value and a corresponding charging current value and charging voltage value of the battery in the whole charging process under each SOH, obtaining a current characteristic curve by a curve fitting algorithm, and recording the charging voltage value corresponding to each SOC value;
   wherein the charging current characteristic curve is a curve of battery charging current changing with the SOCs, and each SOH of the battery corresponds to a current characteristic curve.

5. The method for estimating a service capability of a battery swap station according to claim 4, **characterized in that**,

the inflection point parameters comprise an SOC corresponding to an inflection point, a charging current corresponding to the inflection point, and charging power corresponding to the inflection point, wherein the charging power corresponding to the inflection point is obtained by multiplying the charging current corresponding to the inflection point SOC by the charging voltage corresponding to the inflection point SOC.

6. The method for estimating a service capability of a battery swap station according to claim 5, **characterized in that**, the calculating, according to the initial charging parameters and the inflection point parameters, the charging completion time of the battery of the vehicle for which a reservation for battery swapping has been made, such that the service capability of the battery swap station is estimated comprises the steps of:

   calculating, according to the initial charging parameters and the inflection point parameters, the charging completion time of the battery of each vehicle for which a reservation for battery swapping has been made;
   calculating, according to the charging completion time and battery swap time of the battery of each vehicle for which a reservation for battery swapping has been made, the total battery swap time of all vehicles for which reservations for battery swapping have been made; and
   comparing the total battery swap time with a preset time; wherein if the total battery swap time is greater than the preset time, the service capability of the battery swap station cannot meet current battery swap demands of vehicles for which reservations for battery swapping have been made; otherwise, the service capability of the battery swap station meets the current battery swap demands of vehicles for which reservations for battery swapping have been made.

7. The method for estimating a service capability of a battery swap station according to claim 6, **characterized in that**, the calculating, according to the initial charging parameters and the inflection point parameters, the charging completion time of the battery of each vehicle for which a reservation for battery swapping has been made comprises the steps of:

   assuming that the current characteristic curve comprises M inflection points, where M is an integer greater than or equal to 2, corresponding SOCs at various inflection point are $SOC_1$, $SOC_2 \cdots SOC_{M-1}$ and $SOC_M$ respectively, corresponding charging current values are $Ireq_1$, $Ireq_2 \cdots Ireq_{M-1}$ and $Ireq_M$ respectively, corresponding charging power is P1, P2···PM-1 and PM respectively, and the maximum charging power of the charger is P;
   dividing, by the M inflection points, the current characteristic curve into M+1 segments, which are respectively a first segment, a second segment, ..., an M-th segment, and an (M+1)-th segment;
   wherein the maximum powers acceptable by the battery itself corresponding to different SOCs are different and gradually decrease with increasing of the SOCs; when P is greater than the maximum value of the maximum powers acceptable by the battery, implementing the whole charging process according to the current characteristic curve of the battery; when P is less than the maximum value of the maximum powers acceptable by the battery itself, firstly determining an SOC point corresponding to P on the current characteristic curve, setting the point to $SOC_m$, and when P is less than $SOC_m$, charging the battery according to P; when P is greater than $SOC_m$, charging the battery according to the current characteristic curve; assuming that the SOC that starts charging according to the current characteristic curve is located in the N-th segment, where N is an integer, and $1 \leq N \leq M + 1$, determining N according to P and an inflection point power, and performing segmented calculation of the battery charging completion time specifically as follows:

      (1) if $P \geq P1$, then N=1, estimating the battery charging completion time specifically according to the following formula:

$$\begin{cases} \Delta t_1 = \dfrac{(SOC_1 - SOC_0) * Cr}{Ireq_1} \\[2mm] \Delta t_2 = 2 * \dfrac{(SOC_2 - SOC_1) * Cr}{Ireq_1 + Ireq_2} \\[2mm] \quad\quad\quad\vdots \\[2mm] \Delta t_M = 2 * \dfrac{(SOC_M - SOC_{M-1}) * Cr}{Ireq_{M-1} + Ireq_M} \\[2mm] \Delta t_{M+1} = 2 * \dfrac{(SOC_f - SOC_M) * Cr}{Ireq_M + Ireq_f} \\[2mm] \Delta t = \Delta t_1 + \Delta t_2 + \cdots \Delta t_M + \Delta t_{M+1} \end{cases}$$

(2) if $Pa \leq P < Pa - 1$, where $a = 2, 3, 4 \cdots M$, then $N = a$, estimating the battery charging completion time specifically according to the following formula:

$$\begin{cases} \Delta t_N = \dfrac{(SOC_m - SOC_0) * Cr}{Ireq_m} + 2 * \dfrac{(SOC_N - SOC_m) * Cr}{Ireq_m + Ireq_N} \\[2mm] \Delta t_{N+1} = 2 * \dfrac{(SOC_{N+1} - SOC_N) * Cr}{Ireq_N + Ireq_{N+1}} \\[2mm] \quad\quad\quad\vdots \\[2mm] \Delta t_M = 2 * \dfrac{(SOC_M - SOC_{M-1}) * Cr}{Ireq_{M-1} + Ireq_M} \\[2mm] \Delta t_{M+1} = 2 * \dfrac{(SOC_f - SOC_M) * Cr}{Ireq_M + Ireq_f} \\[2mm] \Delta t = \Delta t_N + \Delta t_{N+1} \cdots \Delta t_M + \Delta t_{M+1} \end{cases}$$

(3) if $P < PM$, then $N = M+1$, estimating the battery charging completion time specifically according to the following formula:

$$\Delta t = \frac{(SOC_m - SOC_0) * Cr}{Ireq_m} + 2 * \frac{(SOC_f - SOC_M) * Cr}{Ireq_m + Ireq_f}$$

wherein in (1)-(3), $SOC_O$ is an SOC value corresponding to the initial charging time, $SOC_f$ is an SOC value corresponding to the charging cut-off time, $Ireq_f$ is an Ireq value corresponding to the charging cut-off time, $\Delta t_1$ is the charging time required for the first segment, $\Delta t_2$ is the charging time required for the second segment, $\Delta t_N$ is the charging time required for the N-th segment, $\Delta t_{N+1}$ is the charging time required for the N+1-th segment, ..., $\Delta t_M$ is the charging time required for the M-th segment, $\Delta t_{M+1}$ is the charging time required for the M+1-th segment, $\Delta t$ is the battery charging completion time, $Ireq_m$ is the maximum output current of the charger, $SOC_m$ is an SOC value corresponding to $Ireq_m$ on the current characteristic curve, and Cr is a current rated capacity of the battery.

8. An apparatus for estimating a service capability of a battery swap station, **characterized in that**, the apparatus comprises:

a first parameter acquisition module configured to acquire initial charging parameters of a battery of a vehicle for which a reservation for battery swapping has been made;
a second parameter acquisition module configured to acquire a corresponding charging current characteristic curve according to the initial charging parameters, and acquire inflection point parameters of the curve; and a service capability estimation module configured to calculate, according to the initial charging parameters and the inflection point parameters, the charging completion time of the battery of the vehicle for which a reservation for battery swapping has been made, such that the service capability of the battery swap station is estimated.

9. The apparatus for estimating a service capability of a battery swap station according to claim 8, **characterized in that**, the initial charging parameters comprise a maximum charging power of a charger, an initial state of charge (SOC) corresponding to an initial charging state of a battery of a vehicle for which a reservation for battery swapping has been made, and a current state of health (SOH).

10. The apparatus for estimating a service capability of a battery swap station according to claim 9, **characterized in that**, the second parameter acquisition module comprises a curve acquisition unit, which is configured to acquire a corresponding charging current characteristic curve according to the current SOH.

11. The apparatus for estimating a service capability of a battery swap station according to claim 9, **characterized in that**, the apparatus further comprises a characteristic curve generation module, which is configured to acquire an SOC value and a corresponding charging current value and charging voltage value of the battery in the whole charging process under each SOH, obtain a current characteristic curve by a curve fitting algorithm, and record the charging voltage value corresponding to each SOC value;
wherein the charging current characteristic curve is a curve of battery charging current changing with the SOCs, and each SOH of the battery corresponds to a current characteristic curve.

12. The method for estimating a service capability of a battery swap station according to claim 11, **characterized in that**, the inflection point parameters comprise an SOC corresponding to an inflection point, a charging current corresponding to the inflection point, and charging power corresponding to the inflection point, wherein the charging power corresponding to the inflection point is obtained by multiplying the charging current corresponding to the inflection point SOC by the charging voltage corresponding to the inflection point SOC.

13. The apparatus for estimating a service capability of a battery swap station according to claim 10, **characterized in that**, the service capability estimation module comprises:

a first time calculation unit configured to calculate, according to the initial charging parameters and the inflection point parameters, the charging completion time of the battery of each vehicle for which a reservation for battery swapping has been made;
a second time calculation unit configured to calculate, according to the charging completion time and battery swap time of the battery of each vehicle for which a reservation for battery swapping has been made, the total battery swap time of all vehicles for which reservations for battery swapping have been made; and
a service capability estimation unit configured to compare the total battery swap time with a preset time; wherein if the total battery swap time is greater than the preset time, the service capability of the battery swap station cannot meet current battery swap demands of vehicles for which reservations for battery swapping have been made; otherwise, the service capability of the battery swap station meets the current battery swap demands of vehicles for which reservations for battery swapping have been made.

14. The apparatus for estimating a service capability of a battery swap station according to claim 13, **characterized in that**, the first time calculation unit is further configured to perform the steps of:

assuming that the current characteristic curve comprises M inflection points, where M is an integer greater than or equal to 2, corresponding SOCs at various inflection point are $SOC_1$, $SOC_2 \cdots SOC_{M-1}$ and $SOC_M$ respectively, corresponding charging current values are $Ireq_1$, $Ireq_2 \cdots Ireq_{M-1}$ and $Ireq_M$ respectively, corresponding charging power is P1 P2$\cdots$PM-1 and PM respectively, and the maximum charging power of the charger is P;
dividing, by the M inflection points, the current characteristic curve into M+1 segments, which are respectively a first segment, a second segment, ..., an M-th segment, and an (M+1)-th segment;
wherein the maximum powers acceptable by the battery itself corresponding to different SOCs are different and gradually decrease with increasing of the SOCs; when P is greater than the maximum value of the maximum powers acceptable by the battery, implementing the whole charging process according to the current characteristic curve of the battery; when P is less than the maximum value of the maximum powers acceptable by the battery itself, firstly determining an SOC point corresponding to P on the current characteristic curve, setting the point to $SOC_m$, and when P is less than $SOC_m$, charging the battery according to P; when P is greater than $SOC_m$, charging the battery according to the current characteristic curve; assuming that the SOC that starts charging according to the current characteristic curve is located in the N-th segment, where N is an integer, and $1 \leq N \leq M + 1$, determining N according to P and an inflection point power, and performing segmented calculation of the battery charging completion time specifically as follows:

(1) if $P \geq P1$, then N=1, estimating the battery charging completion time specifically according to the following formula:

$$
\begin{cases}
\Delta t_1 = \dfrac{(SOC_1 - SOC_0) * Cr}{Ireq_1} \\
\Delta t_2 = 2 * \dfrac{(SOC_2 - SOC_1) * Cr}{Ireq_1 + Ireq_2} \\
\quad\vdots \\
\Delta t_M = 2 * \dfrac{(SOC_M - SOC_{M-1}) * Cr}{Ireq_{M-1} + Ireq_M} \\
\Delta t_{M+1} = 2 * \dfrac{(SOC_f - SOC_M) * Cr}{Ireq_M + Ireq_f} \\
\Delta t = \Delta t_1 + \Delta t_2 + \cdots \Delta t_M + \Delta t_{M+1}
\end{cases}
$$

(2) if $Pa \leq P < Pa - 1$, where a=2, 3, 4···M, then N = a, estimating the battery charging completion time specifically according to the following formula:

$$
\begin{cases}
\Delta t_N = \dfrac{(SOC_m - SOC_0) * Cr}{Ireq_m} + 2 * \dfrac{(SOC_N - SOC_m) * Cr}{Ireq_m + Ireq_N} \\
\Delta t_{N+1} = 2 * \dfrac{(SOC_{N+1} - SOC_N) * Cr}{Ireq_N + Ireq_{N+1}} \\
\quad\vdots \\
\Delta t_M = 2 * \dfrac{(SOC_M - SOC_{M-1}) * Cr}{Ireq_{M-1} + Ireq_M} \\
\Delta t_{M+1} = 2 * \dfrac{(SOC_f - SOC_M) * Cr}{Ireq_M + Ireq_f} \\
\Delta t = \Delta t_N + \Delta t_{N+1} \cdots \Delta t_M + \Delta t_{M+1}
\end{cases}
$$

(3) if $P < PM$, then N=M+1, estimating the battery charging completion time specifically according to the following formula:

$$
\Delta t = \dfrac{(SOC_m - SOC_0) * Cr}{Ireq_m} + 2 * \dfrac{(SOC_f - SOC_M) * Cr}{Ireq_m + Ireq_f}
$$

wherein in (1)-(3), $SOC_O$ is an SOC value corresponding to the initial charging time, $SOC_f$ is an SOC value corresponding to the charging cut-off time, $Ireq_f$ is an Ireq value corresponding to the charging cut-off time, $\Delta t_1$ is the charging time required for the first segment, $\Delta t_2$ is the charging time required for the second segment, $\Delta t_N$ is the charging time required for the N-th segment, $\Delta t_{N+1}$ is the charging time required for the N+1-th segment, ..., $\Delta t_M$ is the charging time required for the M-th segment, $\Delta t_{M+1}$ is the charging time required for the M+1-th segment, $\Delta t$ is the battery charging completion time, $Ireq_m$ is the maximum output current of the charger, $SOC_m$ is an SOC value corresponding to $Ireq_m$ on the current characteristic curve, and Cr is a current rated capacity of the battery.

15. A controller, comprising a memory and a processor, wherein the memory stores a computer program that, when executed by the processor, is capable of implementing the steps of the method according to any one of claims 1 to 7.

16. A computer readable storage medium for storing computer instructions, wherein the instructions, when executed by a computer or a processor, implement the steps of the method according to any one of claims 1 to 7.

Acquiring initial charging parameters of a battery of a vehicle
for which a reservation for battery swapping has been made

S1

Acquiring a corresponding charging current characteristic curve according to the
initial charging parameters, and acquiring inflection point parameters of the curve

S2

Calculating, according to the initial charging parameters and the inflection point parameters, the
charging completion time of the battery of the vehicle for which a reservation for battery
swapping has been made, such that the service capability of the battery swap station is estimated

S3

*Fig. 1*

*Fig. 2*

First parameter acquisition module — 1

Second parameter acquisition module — 2

Service capability estimation module — 3

*Fig. 3*

## INTERNATIONAL SEARCH REPORT

| International application No. |
| --- |
| PCT/CN2018/083840 |

**A. CLASSIFICATION OF SUBJECT MATTER**

H01M 10/44 (2006.01) i; H02J 7/00 (2006.01) i; G06Q 50/06 (2012.01) i

According to International Patent Classification (IPC) or to both national classification and IPC

**B. FIELDS SEARCHED**

Minimum documentation searched (classification system followed by classification symbols)

G06Q; G06F; H01M 10/4; H02J 7/-; G01R 31/36

Documentation searched other than minimum documentation to the extent that such documents are included in the fields searched

Electronic data base consulted during the international search (name of data base and, where practicable, search terms used)

DWPI, SIPOABS, CNABS, CNTXT, CNKI: 蔚来汽车, 赵金程, 换电, 荷电状态, 剩余电量, 健康状态, 健康度, 电池寿命, 计算, 获取, 拟合, 充电, 电流, 曲线, 拐点, 时长, 时间, 预估, 估计, 预测, NIO NEXTEV, zhao jincheng, change battery, SOC, SOH, fitting, charge, current, curve, inflection, duration, time, estimate? prediction

**C. DOCUMENTS CONSIDERED TO BE RELEVANT**

| Category* | Citation of document, with indication, where appropriate, of the relevant passages | Relevant to claim No. |
| --- | --- | --- |
| Y | CN 103810539 A (NORTH CHINA ELECTRIC POWER UNIVERSITY) 21 May 2014 (21.05.2014), description, paragraphs [0018], [0072] and [0078]-[0157], and figures 1-4 | 1-16 |
| Y | CN 206171363 U (SHAANXI HEAVY DUTY AUTOMOBILE CO., LTD.) 17 May 2017 (17.05.2017), description, paragraph [0035], and figure 1 | 1-16 |
| Y | CN 102820678 A (NORTH CHINA GRID COMPANY LTD ZHANGJIAKOU BRANCH et al.) 12 December 2012 (12.12.2012), description, paragraphs [0004]-[0016] and [0023]-[0040], and figures 1-4 | 1-16 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04 July 2018 | 31 July 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>ZHANG, Yan<br><br>Telephone No. (86-10) 62089842 |

Form PCT/ISA/210 (second sheet) (July 2009)

**INTERNATIONAL SEARCH REPORT**
Information on patent family members

| | International application No. |
| --- | --- |
| | PCT/CN2018/083840 |

| Patent Documents referred in the Report | Publication Date | Patent Family | Publication Date |
| --- | --- | --- | --- |
| CN 103810539 A | 21 May 2014 | CN 103810539 B | 24 August 2016 |
| CN 206171363 U | 17 May 2017 | None | |
| CN 102820678 A | 12 December 2012 | CN 102820678 B | 27 May 2015 |

Form PCT/ISA /210 (patent family annex) (July 2009)